# EUROPÄISCHE PATENTANMELDUNG

(11) **EP 1 932 714 A2**
(43) Veröffentlichungstag der Anmeldung: **18.06.2008**
(21) Anmeldenummer: 07023400.0
(22) Anmeldetag: 04.12.2007
(51) Int. Cl.: B60N 2/28

(54) **Babyschale**

(30) Priorität: 13.12.2006 DE 102006059179
(71) Anmelder: Recaro GmbH & Co. KG, 73230 Kirchheim/Teck (DE)
(72) Erfinder: Beermann, Frank, 73230 Kirchheim / Teck (DE); Ritzel, Michael, 73230 Kirchheim / Teck (DE)
(74) Vertreter: Patentanwälte Hosenthien-Held und Dr. Held

(57) **Zusammenfassung**

Bei einer Babyschale (1) zur Montage auf einem Fahrzeugsitz, mit einem Schalenkorpus (5) und einer Polsterung (15) auf der Innenseite des Schalenkorpus (5), besteht der Schalenkorpus (5) aus einem Hartschaum besteht, und innerhalb des Schalenkorpus (5) ist eine Armierung (7) angeordnet.

## Beschreibung

Die Erfindung betrifft eine Babyschale mit den Merkmalen des Oberbegriffs des Anspruches 1.

Bekannte Babyschale werden beispielsweise spritzgegossen und haben ein relativ großes Gewicht, was den Transport der Babyschale samt Baby von und zum Fahrzeugsitz erschwert.

Der Erfindung liegt die Aufgabe zu Grunde, eine Babyschale der eingangs genannten Art zu verbessern, insbesondere eine leichtere Babyschale zu schaffen. Diese Aufgabe wird erfindungsgemäß durch eine Babyschale mit den Merkmalen des Anspruches 1 gelöst. Vorteilhafte Ausgestaltungen sind Gegenstand der Unteransprüche.

Dadurch, dass der Schalenkorpus aus einem Hartschaum besteht und innerhalb des Schalenkorpus eine Armierung angeordnet ist, sind gegenüber einem herkömmlichen Spritzguss- oder Blasformverfahren ein geringerer Werkzeugaufwand und somit geringere Herstellungskosten möglich, wobei große Variationsmöglichkeiten für das Produktdesign bestehen. Der Schalenkorpus weist ein geringeres Gewicht gegenüber den herkömmlichen Schalen auf und zeigt eine verbesserte Energieaufnahme bei Unfällen. Die vorzugsweise käfigartige Armierung, welche vorzugsweise als Einlegeteil umschäumt wird, sorgt für die nötige Aussteifung und Stabilität. Zum Schutz der Außenseite des Schalenkorpus ist vorzugsweise eine Zierschale vorgesehen. Nach diesem Prinzip werden auch Fahrradhelme hergestellt.

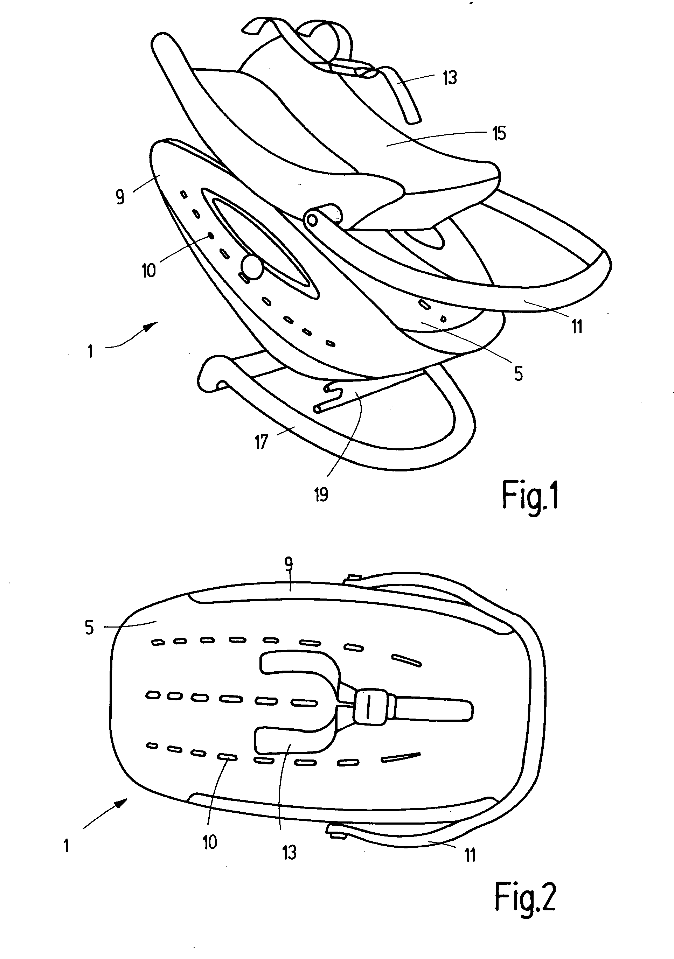

Im folgenden ist die Erfindung anhand eines in der Zeichnung dargestellten Ausführungsbeispiels näher erläutert. Es zeigen
- Fig. 1: eine Explosionsdarstellung des Ausführungsbeispiel, wobei Armierung, Schalenkorpus und Zierschale zusammengefügt sind,
- Fig. 2: eine Draufsicht auf das Ausfüherungsbeispiel ohne Polsterung,

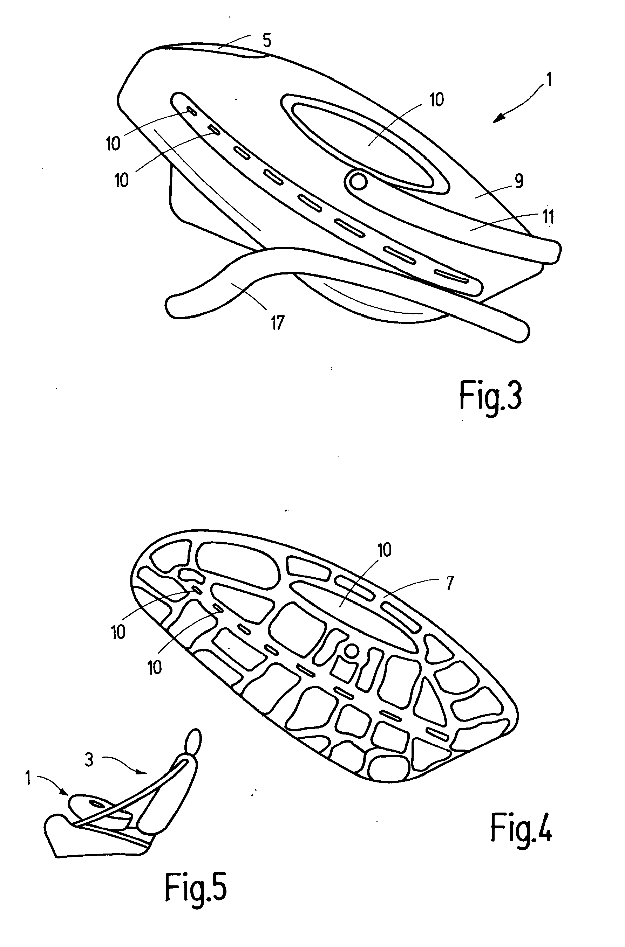

- Fig. 3: eine Seitenansicht des Ausführungsbeispiels,
- Fig. 4: eine Fig. 3 entsprechende Seitenansicht der Armierung,
- Fig. 5: eine schematisierte Seitenansicht eines Fahrzeugsitzes samt Ausführungsbeispiel, und
- Fig. 6: eine Vorderansicht des Ausführungsbeispiels.

Eine Babyschale 1 ist zur Montage auf einem Fahrzeugsitz 3 eines Kraftfahrzeuges und zum Tragen außerhalb des Kraftfahrzeuges vorgesehen. Durch die Form der Babyschale 1 sind eine Innenseite und eine Außenseite definiert. Die Struktur der Babyschale 1 umfasst einen Schalenkorpus 5 und eine Armierung 7, welche innerhalb des Schalenkorpus 5 angeordnet und - zumindest weitgehend - von diesem umschlossen ist. Der Schalenkorpus 5 besteht aus einem Hartschaum, beispielsweise EPP (expandiertes Polypropylen) oder EPS (expandiertes Polystyrol). Bei der Herstellung wird die käfigartige Armierung 7 in das Werkzeug eingelegt und umschäumt. Die vorzugsweise aus Metall und/oder einem harten Kunststoff bestehende Armierung 7 ist also eine Einlegeteil, welche dem Schalenkorpus 5 die nötige Aussteifung und Stabilität gibt.

Auf der Außenseite des Schalenkorpus 5 ist eine Zierschale 9 angebracht, beispielsweise aufgeklebt. Die Zierschale 9 wird beispielsweise im Tiefziehverfahren hergestellt und mit einem wählbaren Dekor bedruckt. Die Zierschale 9 ist der Kontur des Schalenkorpus 5 angepasst und dient vorrangig dem Schutz der Oberfläche des Schalenkorpus 5, welche stoß- und kratzempfindlich ist. Entsprechend hat die Zierschale 9 in der Regel nur eine geringe stabilisierende Wirkung. Zur Verbesserung des Sitz- und Liegeklimas weisen der Schalenkorpus 5 und daran angepasst die Armierung 7 und die Zierschale 9 wenigstens einen gemeinsamen Durchbruch 10, vorliegend mehrere Reihen von gemeinsamen Durchbrüchen 10 auf, also durchgängige Öffnungen, welche die Innenseite und die Außenseite der Babyschale 1 miteinander verbinden.

Die Babyschale 1 umfasst ferner einen schwenkbar angelenkten Tragbügel 11 und ein Gurtsystem 13, welche jeweils an der Armierung 7 befestigt sind. Entsprechend umschließt der Schalenkorpus 5 an diesen Befestigungsstellen die Armierung 7 nicht oder allenfalls mit einer dünnen Schicht. Die Babyschale 1 umfasst noch eine Polsterung 15, welche auf der Innenseite des Schalenkorpus 5 befestigt ist, beispielsweise mittels textiler Haftverschlüsse, und den Durchbrüchen 10 entsprechende Durchbrüche aufweist. Schließlich umfasst die Babyschale 1 einen Standfuß 17, welcher in dem nach unten weisenden Bereich der Außenseite der Babyschale 1 befestigt ist, beispielsweise mittels einer Klammer 19 angeclipst ist. Der Tragbügel 11 und der Standfuß 17 sind vorzugsweise als Kunststoff-Spritzgußteile hergestellt.

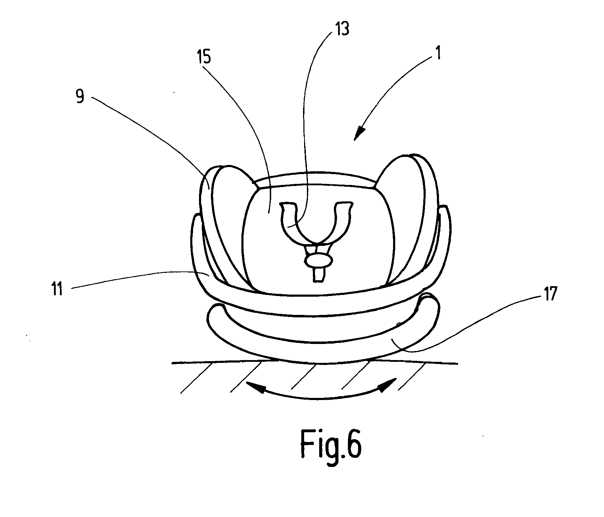

Der Standfuß 17 ist bezüglich der Längsachse der Babyschale 1 bogenförmig gestaltet. Damit ist eine Schwingung um diese Längsachse möglich, wie in Fig. 6 angedeutet, d.h. die Babyschale 1 weist eine integrierte Wiegenfunktion auf.

### Bezugszeichenliste

- 1: Babyschale
- 3: Fahrzeugsitz
- 5: Schalenkorpus
- 7: Armierung
- 9: Zierschale
- 10: Durchbruch
- 11: Tragbügel
- 13: Gurtsystem
- 15: Polsterung
- 17: Standfuß
- 19: Klammer

## Patentansprüche

1. Babyschale zur Montage auf einem Fahrzeugsitz, mit einem Schalenkorpus (5) und einer Polsterung (15) auf der Innenseite des Schalenkorpus (5), **dadurch gekennzeichnet, dass** der Schalenkorpus (5) aus einem Hartschaum besteht und innerhalb des Schalenkorpus (5) eine Armierung (7) angeordnet ist.

2. Babyschale nach Anspruch 1, **dadurch gekennzeichnet, dass** der Schalenkorpus (5) aus expandiertem Polypropylen oder Polystyrol besteht.

3. Babyschale nach einem der vorhergehenden Ansprüche, **dadurch gekennzeichnet, dass** die Armierung (7) käfigartig ausgebildet ist.

4. Babyschale nach einem der vorhergehenden Ansprüche, **dadurch gekennzeichnet, dass** die Armierung (7) ein Einlegeteil ist, welches bei der Herstellung des Schalenkorpus (5) in das Werkzeug eingelegt und umschäumt wird.

5. Babyschale nach einem der vorhergehenden Ansprüche, **dadurch gekennzeichnet, dass** die Armierung (7) aus Metall und/oder einem harten Kunststoff besteht.

6. Babyschale nach einem der vorhergehenden Ansprüche, **dadurch gekennzeichnet, dass** auf der Außenseite des Schalenkorpus (5) eine Zierschale (9) angeordnet ist.

7. Babyschale nach Anspruch 6, **dadurch gekennzeichnet, dass** die Zierschale (9) in einem Tiefziehverfahren hergestellt und/oder mit einem Dekor versehen ist.

8. Babyschale nach Anspruch 6 oder 7, **dadurch gekennzeichnet, dass** der Schalenkorpus (5), die Armierung (7) und die Zierschale (9) wenigstens einen gemeinsamen Durchbruch (10) aufweisen, welcher die Innenseite und die Außenseite der Babyschale (1) miteinander verbindet.

9. Babyschale nach Anspruch 8, **dadurch gekennzeichnet, dass** die Polsterung (15) wenigstens einen dem Durchbruch (10) entsprechenden Durchbruch aufweist.

10. Babyschale nach einem der vorhergehenden Ansprüche, **dadurch gekennzeichnet, dass** an der Armierung (7) ein Gurtsystem (13) befestigt ist.

11. Babyschale nach einem der vorhergehenden Ansprüche, **dadurch gekennzeichnet, dass** an der Armierung (7) ein Tragbügel (11) schwenkbar angelenkt ist.

12. Babyschale nach einem der vorhergehenden Ansprüche, **dadurch gekennzeichnet, dass** in dem nach unten weisenden Bereich der Außenseite der Babyschale (1) ein Standfuß (17) befestigt ist.

13. Babyschale nach Anspruch 11 oder 12, **dadurch gekennzeichnet, dass** der Tragbügel (11) und/oder der Standfuß (17) als Kunststoff-Spritzgußteile hergestellt sind.
